**Europäisches Patentamt**

**European Patent Office**

**Office européen des brevets**

(19)

(11) Numéro de publication : **0 365 395 B1**

(12) **FASCICULE DE BREVET EUROPEEN**

---

(45) Date de publication du fascicule du brevet :
**12.08.92 Bulletin 92/33**

(21) Numéro de dépôt : **89402797.8**

(22) Date de dépôt : **11.10.89**

(51) Int. Cl.⁵ : **B60H 1/24**

---

(54) **Dispositif d'extraction d'air pour un véhicule automobile.**

---

(30) Priorité : **17.10.88 FR 8813629**

(43) Date de publication de la demande :
**25.04.90 Bulletin 90/17**

(45) Mention de la délivrance du brevet :
**12.08.92 Bulletin 92/33**

(84) Etats contractants désignés :
**DE GB IT**

(56) Documents cités :
**FR-A- 2 566 339**
**GB-A- 1 201 890**
**GB-A- 2 170 900**
**PATENT ABSTRACTS OF JAPAN vol. 8, no.**
**140 (M-305)(1577) 29 juin 1984, & JP-A-59 38112**
**(NISSAN JIDOSHA K.K.) 01 mars 1984,**
**PATENT ABSTRACTS OF JAPAN vol. 12, no.**
**227 (M-713)(3074) 28 juin 1988, & JP-A-63 22723**
**(MITSUBISHI MOTORS CORP.) 30janvier 1988,**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Hyaumet, Michel**
**43, Rue François Pinson**
**F-92320 Chatillon (FR)**

(74) Mandataire : **Robert, Jean-François et al**
**Centre Technique Citroen Propriété**
**Industrielle Route de Gisy**
**F-78140 Velizy (FR)**

## Description

L'invention se rapporte au domaine de l'aération des véhicules automobiles et a plus spécialement pour objet un extracteur d'air pour un tel véhicule.

L'introduction d'air dans l'habitacle d'un véhicule automobile par un aérateur ou une vitre ouverte provoquant une surpression, il est nécessaire de prévoir une évacuation d'air. De nombreux systèmes ont été proposés, par exemple des ouïes dans le panneau de custode. Cependant, ceci n'est pas possible si la custode est occupée par une vitre ou si, pour des raisons d'esthétique, on souhaite que l'extérieur du panneau de custode soit parfaitement lisse.

De plus, il faut éviter le bruit dû au passage de l'air et éviter que l'eau ou la boue ne pénètre à l'intérieur du véhicule ou ne détériore le dispositif d'extraction.

L'invention résoud ces problèmes grâce à un dispositif d'extraction d'air silencieux, facile à réaliser et à mettre en place et bien protégé contre les projections éventuelles d'eau, de boue, de poussières, etc...

Plus précisément, l'invention concerne un dispositif d'extraction d'air pour un véhicule automobile, comprenant un conduit en matériau insonorisant disposé entre un panneau intérieur et un panneau extérieur de carrosserie, ce conduit ayant une partie supérieure communiquant avec l'intérieur du véhicule à travers une ouverture prévue dans le panneau intérieur et une partie inférieure comportant une ouverture de sortie pour l'évacuation de l'air, cette partie inférieure étant réalisée de sorte que l'air s'écoule sensiblement verticalement de haut en bas. Le document GB-A-1 201 890 décrit un extracteur d'air de ce type.

Selon la principale caractéristique du dispositif objet de l'invention, celui-ci comporte en outre:
– un déflecteur placé sous le conduit et ayant au moins une paroi déflectrice apte à dévier le jet d'air sortant par ladite ouverture de sortie et s'étendant sous le conduit; et
– des moyens de fixation de ce déflecteur sur le véhicule.

De plus, l'espace entre lesdits panneaux intérieur et extérieur de carrosserie étant un espace fermé, l'ouverture de sortie du conduit se trouve au voisinage immédiat d'une ouverture de dimensions correspondantes faisant communiquer cet espace avec l'extérieur, le déflecteur se trouvant à l'extérieur dudit espace et étant fixé au niveau de ladite ouverture.

L'expression <<s'étendant sous le conduit>> utilisée dans la présente description signifie que la paroi déflectrice a des dimensions suffisamment importantes pour que de l'eau ou de la poussière projetée verticalement de bas en haut rencontre cette paroi avant d'atteindre le conduit.

De préférence, le déflecteur se présente sous la forme d'un boîtier comprenant:
– une face supérieure ayant une ouverture d'entrée d'air;
– une face frontale ayant une ouverture de sortie d'air; et
– des moyens pour canaliser l'air de ladite ouverture d'entrée à ladite ouverture de sortie.

Toujours dans le mode de réalisation préféré, les moyens pour canaliser l'air peuvent comprendre:
– ladite paroi déflectrice; et
– deux parois latérales disposées en continuité avec cette dernière.

Dans ce cas, le boîtier est de préférence réalisé avec un arceau reliant les deux parois latérales et délimitant avec ces dernières et avec la paroi déflectrice lesdites ouvertures d'entrée et de sortie; de plus, la paroi déflectrice est réalisée en deux parties reliées entre elles par une partie en forme de V disposée sensiblement parallèlement aux parois latérales et perpendiculairement à l'arceau.

De préférence, les moyens de fixation du déflecteur sur le véhicule sont des moyens de clippage et le déflecteur est en matière plastique et réalisé en une seule pièce par moulage.

Enfin, selon un dernier aspect de l'invention, l'ouverture de sortie du déflecteur se trouve en regard de la face interne d'un pare-chocs du véhicule, et à une certaine distance de celui-ci.

L'invention apparaîtra mieux à la lecture de la description qui va suivre, donnée à titre d'exemple non limitatif, en référence aux dessins annexés, dans lesquels:
– la Figure 1 est une vue schématique en perspective de l'intérieur d'un véhicule automobile équipé d'un dispositif conforme à l'invention, vu vers l'arrière;
– la Figure 2 est une vue schématique en coupe verticale du dispositif de l'invention suivant la ligne II-II de la Figure 1; et
– la Figure 3 est une vue schématique en perspective du déflecteur utilisé dans le dispositif de l'invention.

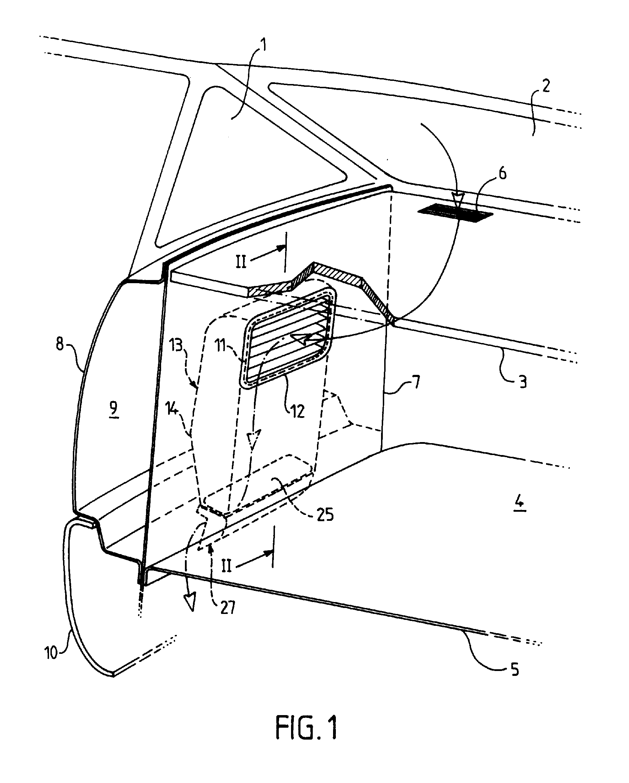

La Figure 1 montre la partie arrière d'un véhicule automobile vue depuis l'intérieur de celui-ci. Pour la clarté du dessin, la banquette arrière n'a pas été représentée. On voit donc la custode qui, dans l'exemple décrit ici, est occupée par une vitre 1 afin d'améliorer l'éclairage de l'habitacle, ainsi que la lunette arrière 2. On voit également la tablette arrière 3 (représentée avec arrachement partiel) qui surplombe le coffre 4 limité à sa partie inférieure par un plancher 5. Des ouvertures telles que 6 sont prévues le long du bord arrière de la tablette 3 (c'est-à-dire celui qui est le plus proche de la lunette arrière 2) afin que l'air puisse passer facilement de l'intérieur de l'habitacle dans le coffre 4.

Ce dernier est limité de chaque côté par un panneau tel que 7 disposé sensiblement verticalement et appelé « doublure d'aile » (il est à noter que c'est la partie arrière droite du véhicule qui est représentée à la figure 1). L'aile 8 est fixée à la doublure d'aile 7 le long de son bord supérieur et de son bord inférieur et elle a une forme telle qu'un espace 9 est ainsi défini entre elle-même et la doublure d'aile 7.

On voit encore sur la Figure 1 le pare-chocs arrière 10 placé à l'extérieur du véhicule, au niveau de la partie inférieure de l'aile 8.

Une ouverture 11 équipée d'une grille 12 est ménagée dans la doublure d'aile 7, ce qui permet à l'air de s'écouler du coffre 4 vers l'espace 9. C'est dans ce dernier que se trouve le dispositif d'extraction d'air objet de l'invention, portant la référence générale 13, lequel va être décrit plus en détail ci-dessous. Un autre dispositif semblable est disposé symétriquement de l'autre côté du véhicule.

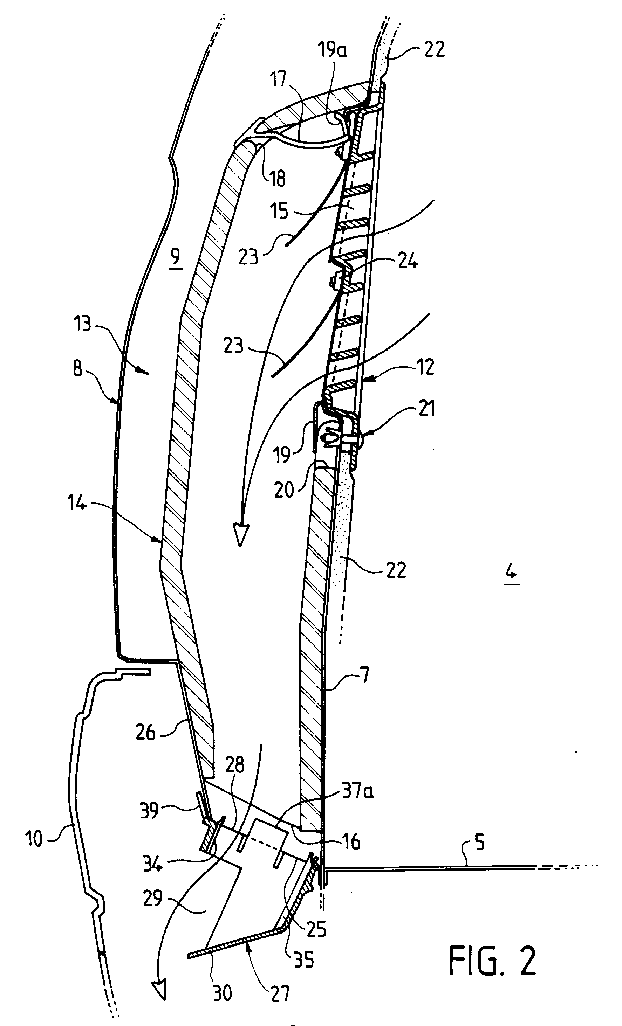

En se référant aux Figures 1 et 2, on voit que ce dispositif se compose essentiellement d'un conduit 14, de forme approximativement parallèlépipédique et disposé suivant une direction générale verticale contre la face externe de la doublure d'aile 7. Ce conduit est réalisé en matériau insonorisant, par exemple un absorbant semi-rigide à base d'ouate. Il présente à sa partie supérieure une ouverture 15 de dimensions correspondant à celles de l'ouverture 11 prévue dans la doublure d'aile 7; la largeur de l'ouverture 15, comptée perpendiculairement au plan de la figure 2 est pratiquement égale à celle du conduit 14. Ce dernier présente, à sa partie inférieure, une ouverture 16 permettant l'écoulement de l'air à peu près verticalement de haut en bas.

Le conduit 14 est fixé sur la doublure d'aile 7 de préférence par clippage. Dans le mode de réalisation préféré, on utilise un clip 17 placé à la partie supérieure du conduit 14, au milieu de celui-ci. Le clip 17 prend appui d'une part sur la face extérieure du conduit 14 grâce à un orifice 18 ménagé dans ce dernier et, d'autre part, sur une face interne de la doublure d'aile 7, au niveau du bord supérieur de l'ouverture 11. De plus, au niveau du bord inférieur de cette dernière, la doublure d'aile présente deux pattes rabattues 19 aptes à pincer la paroi du conduit 14.

On va maintenant décrire les moyens de fixation de la grille 12 sur la doublure d'aile 7. Pour cela, on a prévu, à la partie supérieure de la grille, deux pattes 19a qui prennent appui sur une face externe de la doublure d'aile 7 tandis qu'à sa partie inférieure, la grille 12 est maintenue en son milieu contre la doublure d'aile 7 par rivetage, vissage, ou tout moyen équivalent. Une échancrure 20 est prévue dans la paroi du conduit 14 à cet endroit pour permettre le passage des moyens de fixation 21. Quant aux pattes 19a, elles peuvent être venues de moulage avec la grille 12.

Du côté du coffre 4, cette dernière prend appui sur le garnissage 22 qui recouvre la doublure d'aile 7, celui-ci n'étant représenté que partiellement sur la figure 2.

Sur sa face externe, la grille 12 est équipée de deux volets en caoutchouc 23 servant de clapets anti-retour. Ces volets ont leur bord inférieur libre et sont fixés à leur partie supérieure, comme indiqué en 24, par exemple par rivetage réalisé par soudure aux ultra-sons. Quant à la grille, elle peut être réalisée en une matière plastique telle que l'ABS, par exemple.

L'ouverture de sortie 16 à la partie inférieure du conduit 14 se trouve au-dessus et à proximité immédiate d'une ouverture 25 de dimensions correspondantes prévue à la partie inférieure de l'aile 8 (figures 1 et 2). De plus, dans cette zone, la paroi externe du conduit 14 est en contact avec une partie 26 de l'aile 8, de sorte que l'air ne peut s'écouler que par les ouvertures 16 et 25.

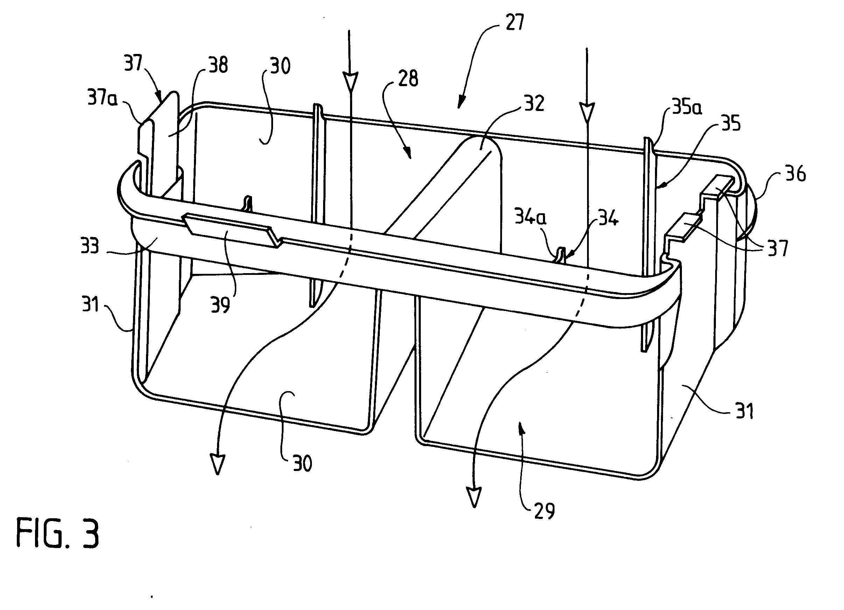

Ces dernières se trouvant relativement près du sol, des moyens ont été prévus pour protéger le conduit 14 contre d'éventuelles projections d'eau, de boue, de poussières, etc... Pour cela, on utilise un déflecteur 27, lequel va maintenant être décrit en référence aux figures 2 et 3.

Dans le mode de réalisation préféré, celui-ci se présente sous la forme d'un boîtier de forme sensiblement prismatique. Il présente une face supérieure avec une ouverture d'entrée d'air 28 et une face frontale avec une ouverture de sortie d'air 29. De plus, une paroi déflectrice 30 est disposée de manière à devier le jet d'air de l'ouverture d'entrée 28 vers l'ouverture de sortie 29. Dans l'exemple décrit ici, cette paroi se compose de deux parties planes faisant un angle entre elles, mais on ne sortirait pas du cadre de l'invention en utilisant une autre forme. Enfin, des parois latérales 31 empêchent l'évacuation de l'air sur les côtés.

Il est à remarquer que, dans l'exemple décrit ici, les ouvertures d'entrée 28 et de sortie 29 occupent la quasi-totalité des surfaces supérieure et frontale respectivement afin de ne pas gêner le passage de l'air et de simplifier la forme du boîtier. Pour donner une certaine rigidité au boîtier, on a réalisé la paroi 30 en deux parties reliées par une partie 32 en forme de V. De plus, on a prévu un arceau 33, lequel limite les ouvertures 28 et 29 avec les bords des parois 30 et 31, ainsi qu'une nervure 36 sur la face externe de la paroi 30.

Le boîtier 27 est fixé sur l'ouverture 25 de l'aile 8 de préférence par clippage, depuis l'extérieur de l'espace 9, compris entre l'aile 8 et la doublure d'aile 7. Pour cela, on a prévu des pattes telles que 37 à la partie supérieure des parois latérales 31.

Dans l'exemple décrit ici, il y a deux pattes 37 sur la paroi 31 qui se trouve du côté droit en regardant la figure 3, mais on ne sortirait pas du cadre de l'invention s'il n'y en avait qu'une de longueur plus importante par exemple. Quant à la patte 37a qui se trouve sur la paroi 31 située du côté gauche, elle est placée au bout d'une languette 38 dont la longueur est ajustée afin d'obtenir une flexibilité permettant le clippage du boîtier 27 tout en assurant un maintien efficace de celui-ci dans l'ouverture 25.

Des nervures telles que 34 sur la face interne de l'arceau 33 et 35 sur la face interne de la paroi 30 présentent à leurs extrémités des échancrures telles que 34a, 35a afin de centrer le boîtier 27 lors de son introduction dans l'ouverture 25.

Si l'on se reporte de nouveau à la figure 2, on voit que le boîtier 27 se trouve en regard de la face interne du pare-chocs 10, mais à une certaine distance de celui-ci afin que l'air puisse s'écouler entre lui-même et le pare-chocs, en direction du sol.

Pour que le boîtier soit monté dans l'ouverture 25 avec une orientation correcte, on a prévu un détrompeur 39 sur l'arceau 33. Ce détrompeur se présente sous la forme d'une patte qui, en position de montage, se trouve contre la face externe de la partie 26 de l'aile 8. La disposition de l'aile et de la doublure d'aile est telle que, si le déflecteur était présenté à l'envers, c'est-à-dire avec l'ouverture 29 dirigée vers l'intérieur du véhicule, le détrompeur ne pourrait pas venir sur une face de l'aile ou de la doublure d'aile située vers l'intérieur du véhicule et le montage serait impossible.

La zone située sous le plancher 5 du coffre, à l'extérieur du véhicule, étant très perturbée, l'eau ou les poussières pénètreraient dans le dispositif d'extraction par l'ouverture 29 si le boîtier 27 était monté à l'envers. La disposition illustrée à la figure 2 permet de constituer une chicane qui rend pratiquement impossible une telle pénétration.

De préférence, le déflecteur est en matière plastique, par exemple du polypropylène chargé de fibres de verre, ce qui permet de le réaliser d'une seule pièce par moulage.

Le dispositif d'extraction d'air objet de l'invention fonctionne de la manière suivante:

Lorsque de l'air pénètre dans l'habitacle du véhicule, à travers une vitre ouverte ou un dispositif d'aération quelconque, cela crée une surpression. Cependant, l'air peut s'écouler dans le coffre 4 grâce aux ouvertures 6 prévues dans la tablette 3 au voisinage de la lunette arrière 2 (figure 1). Cette disposition présente l'avantage de pouvoir désembuer cette dernière en obligeant l'air à lécher la vitre 2 (le trajet de l'air est symbolisé par des flèches sur les figures 1 à 3).

L'air s'écoulant dans le coffre, la pression augmente dans celui-ci. Si la pression extérieure est plus faible que celle règnant dans le coffre 4, les volets 23 (figure 2) se soulèvent et l'air s'écoule du coffre 4 dans le conduit 14 à travers la grille 12. Il est ainsi canalisé le long de ce conduit jusqu'à l'ouverture de sortie 16 prévue à la partie inférieure de ce dernier.

Il sort ensuite de l'espace 9 entre l'aile 8 et la doublure d'aile 7 par l'ouverture 25 et arrive immédiatement dans le boîtier 27 par la face supérieure de celui-ci puisque ce boîtier est clippé dans l'ouverture 25. Le jet d'air est alors dévié par la paroi déflectrice 30 et sort du boîtier 27 par l'ouverture 29 prévue dans la face frontale de ce dernier. Il s'écoule alors, essentiellement en direction du sol, par l'espace compris entre le boîtier 27 et le pare-chocs 10.

Le dispositif objet de l'invention présente des avantages intéressants. Tout d'abord, il ne diminue pas le volume utile du véhicule puisqu'il est placé dans un espace inutilisé, à savoir l'espace 9 entre l'aile 8 et la doublure d'aile 7. De plus, l'écoulement de l'air est silencieux puisque le conduit 14 est en matériau insonorisant. Enfin, ce dernier est bien protégé contre les projections d'eau, de boue, ou de poussières, d'une part parce qu'il ne communique avec l'extérieur qu'à travers l'ouverture 25 de l'aile 8 et, d'autre part, grâce à la présence du déflecteur 27 qui s'étend sous cette ouverture. En effet, si de l'eau ou de la poussière était projetée verticalement de bas en haut, elle buterait sur la face externe de la paroi 30. Quant aux projections latérales, il n'y en a pratiquement pas puisque le boîtier 27 est du côté intérieur du pare-chocs 10 et que, dans le cas particulier décrit ici, la partie supérieure de celui-ci est très près de l'aile 8. De plus, le boîtier constitue une chicane empêchant pratiquement toute remontée dans le conduit 14.

Le boîtier 27 étant en matière plastique, il résiste bien à la corrosion dûe à l'eau ou aux poussières. De toute façon, son remplacement ne poserait pas de problème puisqu'il est facile à réaliser par moulage et facile à fixer puisqu'il se clippe.

Enfin, on peut remarquer que, dans le mode de réalisation préféré, le dispositif de l'invention est invisible depuis l'extérieur du véhicule, ce qui améliore l'esthétique de celui-ci, notamment en évitant de ménager des ouïes de sortie d'air dans un panneau de carrosserie.

**Revendications**

1. Dispositif d'extraction d'air pour un véhicule automobile comprenant un conduit (14) en matériau insonorisant disposé entre un panneau intérieur (7) et un panneau extérieur (8) de carrosserie, ce conduit (14) ayant une partie supérieure communiquant avec l'intérieur du véhicule à travers une ouverture (11) prévue dans le panneau intérieur (7) et une partie inférieure comportant une ouverture de sortie (16) pour l'évacuation de l'airs cette partie inférieure étant réalisée de sorte que l'air s'écoule sensiblement verticalement de haut en bas, caractérisé en ce qu'il comporte en outre:
   – un déflecteur placé sous le conduit (14) et ayant au moins une paroi déflectrice (30) apte à dévier le jet d'air sortant de ladite ouverture de sortie (16) et s'étendant sous le conduit (14); et
   – des moyens de fixation de ce déflecteur sur le véhicule;

et en ce que, l'espace (9) entre lesdits panneaux intérieur (7) et extérieur (8) de carrosserie étant un espace fermé, l'ouverture de sortie (16) du conduit (14) se trouve au voisinage immédiat d'une ouverture (25) de dimensions correspondantes faisant communiquer cet espace (9) avec l'extérieur, le déflecteur se trouvant à l'extérieur dudit espace (9) et étant fixé au niveau de ladite ouverture (25).

2. Dispositif selon la revendication 1, caractérisé en ce que le déflecteur se présente sous la forme d'un boîtier (27) comprenant:
– une face supérieure ayant une ouverture d'entrée d'air (28);
– une face frontale ayant une ouverture de sortie d'air (29); et
– des moyens pour canaliser l'air de ladite ouverture d'entrée (28) à ladite ouverture de sortie (29).

3. Dispositif selon la revendication 2, caractérisé en ce que les moyens pour canaliser l'air comprennent:
– ladite paroi déflectrice (30); et
– deux parois latérales ('31) disposées en continuité avec cette dernière.

4. Dispositif selon la revendication 3, caractérisé en ce que le boîtier (27) comprend un arceau (33) reliant les deux parois latérales (31) et délimitant avec ces dernières et avec la paroi déflectrice (30) lesdites ouvertures d'entrée (28) et de sortie (29), et en ce que la paroi déflectrice (30) est réalisée en deux parties reliées entre elles par une partie en forme de V (32) disposée sensiblement parallèlement aux parois latérales (31) et perpendiculairement à l'arceau (33).

5. Dispositif selon l'une quelconque des revendications 1 à 4, caractérisé en ce que les moyens de fixation du déflecteur sur le véhicule sont des moyens de clippage.

6. Dispositif selon l'une quelconque des revendications 1 à 5, caracterisé en ce que le déflecteur est en matière plastique et est réalisé en une seule pièce par moulage.

7. Dispositif selon l'une quelconque des revendications 2 à 6, caractérisé en ce que, le véhicule comportant un pare-chocs (10) ayant une face interne et une face externe, l'ouverture de sortie du déflecteur se trouve en regard de la face interne du pare-chocs (10) et à une certaine distance de celui-ci.

**Patentansprüche**

1. Entlüftungsvorrichtung für ein Kraftfahrzeug, bestehend aus einer Leitung (14) aus schalldämmendem Material, angeordnet zwischen einer Innenblende (7) und einer Außenblende (8) der Karosserie, wobei diese Leitung (14) über ein oberes Stück verfügt, das mit dem Innenraum des Fahrzeugs über eine Öffnung (11) in der Innenblende (7) verbunden ist, sowie über ein unteres Stück, das eine Austrittsöffnung (16) für den Luftabzug aufweist, wobei dieses untere Stück so ausgeführt ist, daß die Luft deutlich vertikal von oben nach unten strömt, dadurch gekennzeichnet, daß sie außerdem folgende Teile aufweist:
– einen Abweiser, der unter der Leitung (14) angebracht ist, über mindestens eine Ablenkwand (30) verfügt, die geeignet ist, den aus besagter Austrittsöffnung (16) austretenden Luftstrom umzulenken, und sich unter der Leitung (14) erstreckt; und
– Befestigungsteile für den Abweiser am Fahrzeug,
sowie dadurch, daß der Raum (9) zwischen der besagten Innen- (7) und Außenblende (8) geschlossen ist, die Austrittsöffnung (16) der Leitung (14) in unmittelbarer Nähe einer Öffnung (25) mit den entsprechenden Abmessungen liegt, die diesen Raum (9) mit draußen verbindet, und der Abweiser sich außerhalb des besagten Raums (9) befindet und in Höhe der besagten Öffnung (25) befestigt ist.

2. Vorrichtung gemäß Anspruch 1, dadurch gekennzeichnet, daß der Abweiser ein Gehäuse (27) aus folgenden Teilen bildet:
– einer Oberseite mit einer Lufteintrittsöffnung (28);
– einer Vorderseite mit einer Luftauslaßöffnung (29); und
– einer Vorrichtung zur Führung der Luft von der besagten Eintrittsöffnung (28) zur besagten Austrittsöffnung (29).

3. Vorrichtung gemäß Anspruch 2, dadurch gekennzeichnet, daß die Vorrichtung zur Führung der Luft folgende Teile aufweist:
– die besagte Umlenkwand (30) und
– zwei Seitenwände (31), die mit letzterer direkt verbunden sind.

4. Vorrichtung gemäß Anspruch 3, dadurch gekennzeichnet, daß das Gehäuse (27) die beiden Seitenwände (31) über ein bogenförmiges Teil (33) miteinander verbindet und mit diesen und der Ablenkwand (30) die besagte Eintritts- (28) und Austrittsöffnung (29) formt, sowie dadurch, daß die Ablenkwand (30) aus zwei durch ein V-förmiges Teil (32) miteinander verbundenen Teilen besteht, wobei dieses Teil deutlich parallel zu den Seitenwänden (31) und senkrecht zum Bogen (33) angeordnet ist.

5. Vorrichtung gemäß einem der Ansprüche 1 bis 4, dadurch gekennzeichnet, daß die Befestigungsvorrichtung des Abweisers am Fahrzeug aus Clips bestehen.

6. Vorrichtung gemäß einem der Ansprüche 1 bis 5, dadurch gekennzeichnet, daß der Abweiser aus Kunststoff besteht und aus einem Teil gegossen ist.

7. Vorrichtung gemäß einem der Ansprüche 2 bis 6, dadurch gekennzeichnet, daß, da das Fahrzeug über einen Stoßdämpfer (10) mit einer Innen- und einer Außenseite verfügt, sich die Austrittsöffnung des Abweisers gegenüber der Innenseite des Stoßdämpfers (10) und in einer bestimmten Entfernung davon befindet.

## Claims

1. A device for the extraction of air-for a motor vehicle, comprising a pipe (14) of sound-proofing material arranged between an internal panel (7) and an external panel (8) of the body of the vehicle, this pipe (14) having an upper part communicating with the interior of the vehicle through an opening (11) provided in the internal panel (7) and a lower part comprising an outlet opening (16) for the evacuation of the air, this lower part being produced such that the air flows substantially vertically from top to bottom, characterised in that it further comprises:

— a deflector placed beneath the pipe (14) and having at least one deflecting wall (30) suited to deflect the jet of air leaving said outlet opening (16) and extending beneath the pipe (14); and

— means for the attachment of this deflector on the vehicle;

and in that, the space (9) between said internal (7) and external (8) panels of the body of the vehicle being a closed space, the outlet opening (16) of the pipe (14) is in the immediate vicinity of an opening (15) of corresponding dimensions causing this space (9) to communicate with the exterior, the deflector being situated at the exterior of said space (9) and being fixed at the level of said opening (25).

2. A device according to Claim 1, characterised in that the deflector is in the form of a casing (27) comprising:

— an upper face having an air inlet opening (28);

— a frontal face having an air outlet opening (29); and

— means for channelling the air from said inlet opening (28) to said outlet opening (29).

3. A device according to Claim 2, characterised in that the means for channelling the air comprise:

— said deflecting wall (30); and

— two lateral walls (31) arranged in continuity with the latter.

4. A device according to Claim 3, characterised in that the casing (27) comprises an arch (33) connecting the two lateral walls (31) and delimiting with these latter and with the deflecting wall (30) said inlet (28) and outlet (29) openings, and in that the deflecting wall (30) is produced in two parts connected with each other by a V-shaped part (32) arranged substantially parallel to the lateral walls (31) and perpendicular to the arch (33).

5. A device according to any one of Claims 1 to 4, characterised in that the means for attaching the deflector on the vehicle are clipping means.

6. A device according to any one of Claims 1 to 5, characterised in that the deflector is of plastics material and is produced in a single piece by moulding.

7. A device according to any one of Claims 2 to 6, characterised in that, with the vehicle comprising a bumper (10) having an internal face and an external face, the outlet opening of the deflector is situated facing the internal face of the bumper (10) and at a certain distance therefrom.

FIG. 1

FIG. 2

FIG. 3